# EUROPEAN PATENT SPECIFICATION

(11) **EP 4 608 535 B1**
(45) Date of publication and mention of the grant of the patent: **16.09.2026**
(21) Application number: 23808769.6
(22) Date of filing: 16.11.2023
(51) Int. Cl.: B01D 45/16, B04C 3/06

(54) **FLUID SEPARATOR AND FUEL CELL SYSTEM WITH A LIQUID SEPARATOR**
FLÜSSIGKEITSABSCHEIDER UND BRENNSTOFFZELLENSYSTEM MIT FLÜSSIGKEITSABSCHEIDER
SÉPARATEUR DE LIQUIDE ET SYSTÈME DE PILE À COMBUSTIBLE DOTÉ DUDIT SÉPARATEUR DE LIQUIDE

(30) Priority: 28.11.2022 DE 102022131312
(43) Date of publication of application: 03.09.2025
(73) Proprietor: MANN+HUMMEL GmbH, 71636 Ludwigsburg (DE)
(72) Inventor: WEBER, Andreas, 71636 Ludwigsburg (DE)
(74) Representative: Mann + Hummel Intellectual Property
(86) International application number: PCT/EP2023/081986
(87) International publication number: WO 2024/115122

(56) References cited:
- WO-A1-2022/200047
- CN-A- 114 259 801
- JP-A- 2010 104 906
- US-B2- 7 338 545

## Description

### TECHNICAL FIELD

The invention concerns a liquid separator for separating a liquid, in particular water, from a fluid flow, in particular an air flow of the fuel cell system, as well as a fuel cell system with a liquid separator.

### BACKGROUND ART

EP 1167743 B1 discloses a water separator configured as a swirl separator. The water separator comprises an inner tube and an outer tube which are arranged sequentially one after another in axial direction, wherein the inner tube projects with an axial section into the outer tube and the outer tube comprises a water outlet arranged tangentially in swirl direction. WO 2022/200047 A1, US 7 338 545 B2, JP 2010 104906 A and CN 114 259 801 A show other relevant prior art documents.

### SUMMARY

It is an object of the invention to provide an improved liquid separator for separating a liquid, in particular water, from a fluid flow, in particular an air flow of a fuel cell system.

A further object resides in providing a fuel cell system with such a liquid separator.

The aforementioned objects are solved according to an aspect of the invention by a liquid separator for separating a liquid, in particular water, from a fluid flow, in particular an air flow of a fuel cell system, comprising at least one separation stage with a housing with a flow-conducting region which is connected to a fluid conduit with a first diameter, wherein the flow-conducting region comprises at least one inner tube and at least one outer tube which are arranged in an axial direction relative to each other, wherein the inner tube adjoins the outer tube and is arranged in flow direction downstream of the outer tube, wherein a swirl generator for producing a swirl of the fluid flow is arranged in the fluid conduit, wherein a separation region is arranged at a radially outer side of the inner tube and of the outer tube and connected to a liquid outlet, in particular a water outlet, which extends at a slant to the axial direction and extends with its outlet opening preferably opposite to the flow direction, wherein the outer tube comprises an inflow region and a conical and/or tulip-shaped region following in flow direction, wherein the inflow region is connected to the fluid conduit, wherein the conical region comprises a downstream second diameter, wherein the inner tube is conically embodied and comprises an upstream third diameter, and wherein a flow-calmed region with at least one flow-calming element is arranged between the separation region and the liquid outlet.

According to further aspect of the invention, at least one conical region is at least partially cylindrically embodied.

According to a further aspect of the invention, the objects are solved by a fuel cell system with a cathode supply air path and a cathode exhaust air path of a fuel cell unit and with at least one liquid separator.

Beneficial embodiments and advantages of the invention result from the further claims, the description, and the drawing.

According to an aspect of the invention, a separator for separating liquid, in particular water, from a fluid flow, in particular an air flow of a fuel cell system, is proposed, comprising at least one separation stage with a housing with a flow-conducting region which is connected to a fluid conduit with a first diameter. The flow-conducting region comprises at least one inner tube and at least one outer tube which are arranged in an axial direction relative to each other. The inner tube adjoins the outer tube and is arranged in flow direction downstream of the outer tube. A swirl generator for producing a swirl of the fluid flow is arranged in the fluid conduit. The separation region is arranged at a radially outer side of the inner tube and of the outer tube and connected to a liquid outlet which extends at a slant to the axial direction and extends with its outlet opening preferably opposite to the flow direction. The outer tube comprises an inflow region and a conical and/or tulip-shaped region following in flow direction, wherein the inflow region is connected to the fluid conduit. The conical region comprises a downstream second diameter. The inner tube is embodied conically and/or tulip-shaped and comprises an upstream third diameter. In this context, a flow-calmed region with at least one flow-calming element is arranged between the separation region and the liquid outlet.

According to a further aspect of the invention, at least one conical region is at least partially cylindrically embodied.

Advantageously, the proposed component can serve for liquid separation from air or gas flows, for example, in a cathode air path or an exhaust outlet of a fuel cell system. For example, water from the reaction of hydrogen with oxygen in a fuel cell system is present in a two-phase flow and is expediently separated by water separators.

Advantageously, the liquid separator can be configured as a swirl separator in which, in the intended state, the liquid outlet extends at a slant to the axial direction and extends with its outlet opening preferably opposite to the flow direction. Beneficially, the interior of the liquid separator comprises in this context an inner tube and an outer tube which are arranged sequentially following each other in axial direction, wherein the inner tube at the transition to the outer tube has a smaller diameter than the outer tube. The flow-conducting region in the interior of outer tube and inner tube is thus configured for swirl separation.

The fluid flow, in particular air, is supplied to the separation stage by a fluid conduit with a first diameter in which a swirl generator is arranged which generates a swirl in the fluid flow. The fluid flows through the flow-conducting region in the interior of an outer tube which opens in flow direction in a funnel shape with a conical and/or tulip-shaped region with an exit diameter, the second diameter. An inner tube is arranged so as to adjoin immediately and is also configured conically and/or tulip-shaped and opens in flow direction in a funnel shape, wherein however the entry diameter, the third diameter, as well as the exit diameter are smaller than the exit diameter of the outer tube. A deceleration region is formed in the inner tube for such an arrangement of outer tube and inner tube. At the radially outer side of the conical region of the outer tube as well as of the inner tube, the separation region, in which the separated liquid is collected and can be supplied through a flow-calmed region to the liquid outlet, is arranged inside of the housing of the liquid separator.

The flow-calmed region comprises at least one flow-calming element by means of which the swirl of the fluid flow is reduced so that the separated liquid can conveniently reach the liquid outlet. The flow-calming element can be formed, for example, as a rib which is arranged transversely to the swirl of the fluid flow and thus interrupts the swirl. Alternatively, the flow-calming element can be embodied as a grid which is arranged between the separation region and the flow-calming region and, as a permeable separation wall, interrupts the swirl of the fluid flow.

With the liquid separator, an improvement of the separation performance can thus be achieved in that liquid proportions which appear as a wall film in the fluid flow after the first separation stage are beneficially separated and can flow out. The liquid separator differs in this way from the prior art by providing an improved functional separation performance at reduced pressure loss.

The proposed liquid separator comprises a separation stage with an outer tube and an inner tube. Beneficially, a plurality of separation stages can be arranged one after another in a modular fashion in order to achieve in this way an increased degree of separation. Thus, a liquid separator can comprise, for example, two separation stages or four separation stages which are connected in series.

The liquid separator can advantageously be operated in a horizontal installation or in a vertical installation, for example, in a fuel cell system of a vehicle. Also, the liquid separator can be operated at an angle to the horizontal.

Advantageously, the liquid separator can be formed of plastic material and, for example, be produced by conventional injection molding methods. Preferably, at least the liquid outlet is made of plastic material.

According to another advantageous embodiment, the liquid separator is produced by a 3D printing method or as sintered metal part.

The swirl generator can advantageously be embodied as one piece together with the fluid conduit. In this way, the liquid separator can be produced inexpensively. As an alternative, it is also possible that the swirl generator is arranged exchangeably in the fluid conduit and can be replaced, as needed.

A separation stage of a liquid separator can be produced beneficially as a modular component which is then combined with one or a plurality of further liquid separators in case of a multistage liquid separator. In this context, the housings of the individual separation stages can be welded or adhesively connected, for example.

According to a beneficial embodiment of the liquid separator, the third diameter can be smaller than the first diameter and the first diameter smaller than the second diameter. With such a dimensioning, the fluid flow in the inner tube can be decelerated in a suitable manner in order to achieve in this way a beneficial separation of liquid, in particular of water, in the conical and/or tulip-shaped region of the outer tube and, in continuation in the separation region, radially outside of the inner tube and of the conical and/or tulip-shaped region of the outer tube.

According to a beneficial embodiment of the liquid separator, the flow-calming element can be configured as a rib wherein the rib extends along an inner wall of the flow-calmed region toward the liquid outlet. In particular, the rib can extend at the bottom of the inner wall for intended installation. The rib can be beneficially arranged transversely to the swirl of the fluid flow. In this way, the swirl of the fluid flow is reduced so that the separated liquid can conveniently reach the liquid drain.

According to the invention, the flow-calming element of the liquid separator is construed as a grid arranged in a ring shape about the outer tube and separating the separation region from the flow-calmed region. In particular, the flow-calming element, viewed in flow direction, can be convexly curved. Alternatively, the flow-calming element can also be designed as a grid which is arranged between the separation region and the flow-calmed region. For example, the grid can be arranged as a cut-open torus about the outer tube. In this way, the swirl of the fluid flow can be reduced so that the separated liquid can conveniently reach the liquid drain.

According to a beneficial embodiment of the liquid separator, a ratio of the second diameter to the third diameter can amount to at least 1 and at most 3, preferably at least 1.5 and at most 2. Thus, the ratio of the exit diameter of the conical and/or tulip-shaped region of the outer tube in relation to the entry diameter of the inner tube can be advantageously set such that in this way a beneficial influence on the flow can be achieved and the separation rate of the liquid can thus be increased.

According to a beneficial embodiment of the liquid separator, an axial distance between the inner tube and the outer tube can amount to between -20 mm and +20 mm, wherein a negative distance means that the inner tube 12 is immersed in the outer tube 22. In particular, the distance can amount to preferably 0 mm. The inner tube can thus be immersed slightly in the outer tube or at most have a minimal distance to the outer tube so that in this way a beneficial influence on the flow can be achieved and the separation rate of the liquid can thus be increased.

According to a beneficial embodiment of the liquid separator, a ratio of a length of the inner tube to a length of the outer tube can amount to at least 0.1 and at most 1, preferably at least 0.3 and at most 0.4. The inner tube comprises advantageously a reduced to a much-reduced length compared to the outer tube so that in this way a beneficial influence on the flow can be achieved and the separation rate of the liquid can thus be increased.

According to a beneficial embodiment of the liquid separator, a half-angle of cone of the conical inner tube can amount to between -10° and +20°. The cone shape of the inner tube can thus be embodied from funnel-shaped widening to funnel-shaped tapering such that in this way a beneficial influence on the flow can be achieved and the separation rate of the liquid can thus be increased.

According to a beneficial embodiment of the liquid separator, a half-angle of cone of the conical region of the outer tube can amount to between -10° and +20°. The cone shape of the outer tube can also be configured in this way from funnel-shaped widening to funnel-shaped tapering such that in this way a beneficial influence on the flow can be achieved and the separation rate of the liquid can thus be increased.

According to a beneficial embodiment of the liquid separator, a half-angle of cone of the inflow region of the outer tube can amount to between 0° and +10°. The cone shape of the inflow region of the outer tube can thus be varied across a reduced angle range so that in this way a beneficial influence on the flow can be achieved and the separation rate of the liquid can thus be increased.

According to a beneficial embodiment of the liquid separator, a slant of a liquid-discharging flank of the flow-calmed region, for installation as intended, can amount to between 0° and 60°, preferably 30°, in relation to the direction of gravity. In this manner, the separated liquid in intended operation of the liquid separator can drain conveniently.

According to a beneficial embodiment of the liquid separator, the flank of the flow-calmed region, for intended horizontal installation, can be slanted toward the axial direction in flow direction. For intended vertical installation, the liquid-discharging flank can be slanted away from the axial direction in flow direction. In this manner, the separated liquid, in intended operation of the liquid separator, can be discharged conveniently.

According to a beneficial embodiment, in particular in case of a vertical installation of the liquid separator, a liquid drainage opening can be arranged at the geodetically lowest position of the hub of the swirl generator. The liquid drainage opening prevents a collection of liquid at the hub inner side in case the hub is inwardly recessed or comprises a hollow space, for example, as a result of manufacture, in particular when manufactured as an injection molded part. Due to thermal behavior of liquids, in particular the volume expansion of water at low temperatures, a collection of liquid is to be prevented. The liquid drainage opening is provided with a diameter as small as possible which, on the one hand, prevents a bypass flow to the swirl generator through the hub of the swirl generator, on the other hand, is so large that the surface tension enables the liquid to flow out through the opening. Preferably, the opening, in particular for water drainage, comprises a diameter of at least 2 mm or a diameter-equivalent surface area for 2 mm for non-round cross section surface areas. In case of small liquid separators, the liquid drainage opening can comprise a diameter up to the hub inner diameter.

According to a beneficial embodiment, the liquid separator can comprise at least two separation stages, wherein, sequentially arranged in flow direction, an outer tube and an inner tube are alternatingly adjacently arranged, respectively. Beneficially, a plurality of separation stages can be arranged one after another in a modular fashion in order to achieve in this way an increased degree of separation. Thus, a liquid separator can comprise, for example, two separation stages or four separation stages which are connected in series.

According to a beneficial embodiment, in case of separation stages which follow each other in flow direction, they each can be embodied identically or at least mostly identically. Beneficially, a plurality of identical or at least almost identical separation stages can be arranged one after another in a modular fashion in order to achieve in this way an increased degree of separation. Thus, a liquid separator, for example, can comprise two separation stages or four separation stages which are connected in series. The housings of the individual separation stages can be beneficially welded or adhesively connected to each other in order to achieve a seal-tight fluid conduit.

According to a further aspect of the invention, a fuel cell system is proposed with a cathode supply air path and a cathode exhaust air path of a fuel cell unit and with at least one liquid separator.

Advantageously, the liquid separator can serve for separating a liquid, in particular water, from air or gas flows, for example, in a cathode air path or an exhaust air outlet of a fuel cell system. For example, water from the reaction of H2 with O2 in a fuel cell system is present in a two-phase flow and is separated expediently by water separators.

In a further aspect of the invention, the liquid separator can be inserted into an anode air path of a fuel cell system.

### BRIEF DESCRIPTION OF DRAWINGS

Further advantages result from the following drawing description. In the drawings, embodiments of the invention are illustrated. The drawings, the description, and the claims contain numerous features in combination. A person of skill in the art will consider the features expediently also individually and combine them to expedient further combinations. It is shown in an exemplary fashion in:
Figure 1 a longitudinal section through a horizontally operated liquid separator with a separation stage according to an embodiment of the invention;
Figure 2 a schematic illustration of the exemplary geometric measures and dimensions of a liquid separator according to Figure 1;
Figure 3 a side view of a horizontally operated liquid separator with two separation stages according to a further embodiment of the invention;
Figure 4 a longitudinal section through the liquid separator according to Figure 3;
Figure 5 a longitudinal section through a horizontally operated liquid separator with four separation stages according to a further embodiment of the invention;
Figure 6 an isometric inner view of the inner tube of the liquid separator according to Figure 1 in flow direction;
Figure 7 an isometric inner view of the outer tube of the liquid separator according to Figure 1 opposite to the flow direction;
Figure 8 a longitudinal section through a vertically operated liquid separator with a separation stage according to a further embodiment of the invention;
Figure 9 a longitudinal section through a vertically operated liquid separator with two separation stages according to a further embodiment of the invention; and
Figure 10 a simplified illustration of a fuel cell system with cathode supply air path and cathode exhaust air path.

### DESCRIPTION OF EMBODIMENTS

In the Figures, same or same-type components are identified with same reference characters. The Figures show only examples and are not to be understood as limiting.

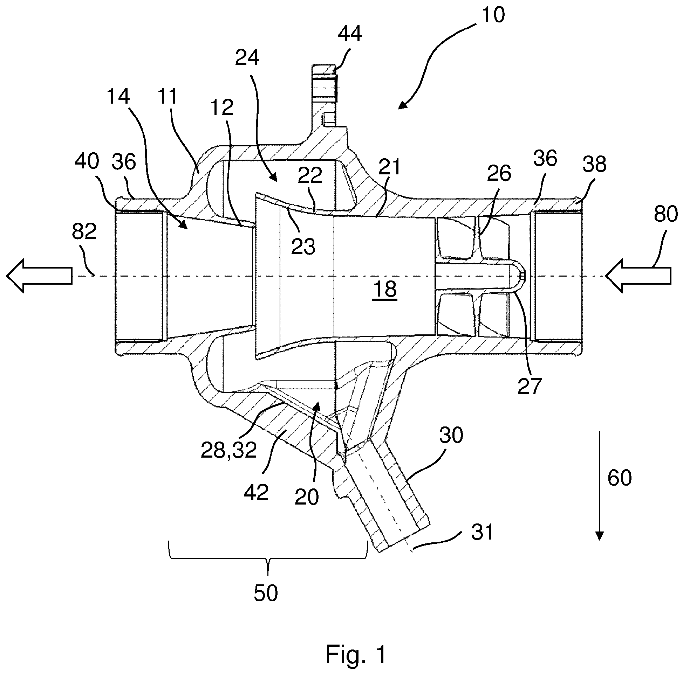

Figure 1 shows a longitudinal section of a horizontally operated liquid separator in an embodiment as water separator 10 with a separation stage 50 according to an embodiment of the invention.

The water separator 10 serves for separating water from a fluid flow, in particular an air flow of a fuel cell system. The water separator 10 comprises a separation stage 50 with a housing 11 with a flow-conducting region 18 which is connected to a fluid conduit 36 with a first diameter D1. The flow-conducting region 18 comprises an inner tube 12 and an outer tube 22 which are arranged in an axial direction 82 relative to each other. The inner tube 12 adjoins the outer tube 22 and is arranged in flow direction 80 downstream of the outer tube 22. The fluid flow is supplied to the fluid conduit 36 through the inlet 38 and exits the water separator 10 at the outlet 40 of the fluid conduit 36 at the other end of the housing 11.

In the fluid conduit 36, a swirl generator 26 for producing a swirl of the fluid flow is arranged. The swirl generator 26 can be embodied as one piece together with the fluid conduit 36 or can be exchangeable. The flow-conducting region 18 is thus embodied for swirl separation of water from the fluid flow.

The separation region 24 is arranged at a radially outer side of the inner tube 12 and of the outer tube 22 and is connected to a water outlet 30 which extends at a slant to the axial direction 82 and extends with its outlet opening opposite to the flow direction 80.

The outer tube 22 comprises an inflow region 21 and a conical region 23 following in flow direction 80. The inflow region 21 is connected to the fluid conduit 36. The conical region 23 widens in flow direction 80 in a funnel shape, in particular tulip-shaped, and comprises a downstream second diameter D2 as exit diameter which is larger than the first diameter D1 of the fluid conduit 36.

The inner tube 12 is conically embodied and comprises an upstream third diameter D3 as an entry diameter. The third diameter D3 is smaller than the exit diameter D1 so that the inner tube 12 also widens in a funnel shape in flow direction.

Between the separation region 24 and the water outlet 30, a flow-calmed region 20 with at least one flow-calming element 28 is arranged. The flow-calming element 28 is designed as a rib 32 and extends along an inner wall of the flow-calmed region 20 to the water outlet 30. In particular, the rib 32 extends at the bottom of the inner wall in case of installation as intended.

The flank 42 of the flow-calmed region 20 in case of intended horizontal installation is slanted toward the axial direction 82 in flow direction 80.

The water separator 10 can be fastened, for example, in a fuel cell system 100, with a plurality of mounting flanges 44 of which in Figure 1 only one is visible,

The fluid flow, in particular air, is supplied to the separation stage 50 through the fluid conduit 36 with a first diameter D1, in which the swirl generator 26 is arranged which generates a swirl in the fluid flow. The fluid flows through the flow-conducting region 18 in the interior of the outer tube 22 which, in flow direction 80, opens by the conical region 23 in a funnel shape with an outer diameter, the second diameter D2. The inner tube 12 is arranged immediately adjacent and is also of a conical configuration and opens in flow direction 80 in a funnel shape, wherein however the entry diameter, the third diameter D3, as well as the exit diameter D1 are smaller than the exit diameter D2 of the outer tube 22. The deceleration region 14 is formed in the inner tube 12 for such an arrangement of outer tube 22 and inner tube 12. The separation region 24, in which the separated water is collected and can be supplied through the flow-calmed region 20 to the water outlet 30, is arranged within the housing 11 of the water separator 10 at the radially outer side of the conical region 23 of the outer tube 22 as well as of the inner tube 12.

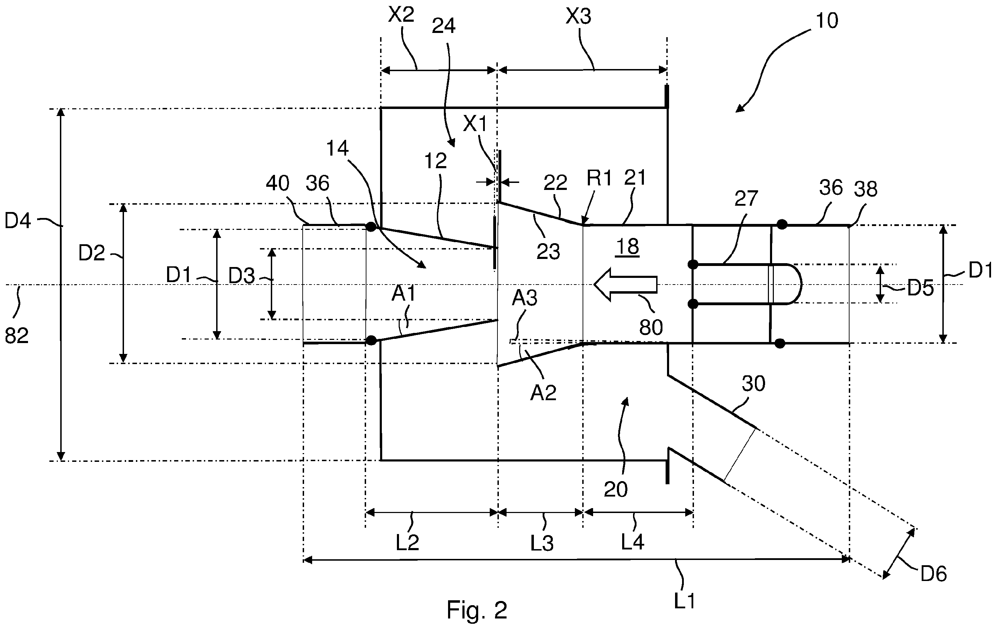

Figure 2 shows a schematic illustration of the geometric measures of a water separator 10 according to Figure 1.

The ranges of the measures and ratios specified in Figure 2 provide particularly advantageous embodiments of the water separator 10 according to the invention with a separation stage 50 for a beneficial separation. However, a good water separation can be achieved also with deviating measures and ratios.

It has been found to be advantageous when a ratio of the second diameter D2 to the third diameter D3 amounts to at least 1 and at most 3, preferably at least 1.5 and at most 2.

The housing 11 comprises an inner diameter D4. The swirl generator 26 comprises a swirl generator hub 27 with a diameter D5.

Furthermore, an axial distance X1 between the inner tube 12 and the outer tube 22 can amount beneficially to between -20 mm and +20 mm. In this context, a negative distance X1 means that the inner tube 12 is immersed in the outer tube 22. The distance X1 can preferably amount to 0 mm.

A ratio of a length X2 of the inner tube 12 to a length X3 of the outer tube 22 of at least 0.1 and at most 1, preferably at least 0.3 and at most 0.4, has been found to be beneficial also.

A half-angle of cone A1 of the conical inner tube 12 can amount beneficially to between -10° and +20°.

Beneficially, a half-angle of cone A2 of the conical region 23 of the outer tube 22 can amount to between -10° and +20°.

A half-angle of cone A3 of the inflow region 21 of the outer tube 22 can beneficially amount to between 0° and +10°.

The embodiment illustrated in Figure 1 of a water separator 10, can have, for example, the following measures, as defined in Figure 2:
half-angle of cone of inner tube 12: A1 = 8.5°,
half-angle of cone of conical region 23 of outer tube 22: = 19.5°,
half-angle of cone of inflow region 21 of outer tube 22: A3 = 1.4°,
diameter of fluid line 36: D1 = 52 mm,
exit diameter of outer tube 22: D2 = 68 mm,
entry diameter of inner tube 12: D3 = 42 mm
diameter of housing 11: D4 = 100 mm,
diameter of swirl generator hub 27: D5 = 15.4 mm,
diameter of water drain 30: D6 = 15 mm,
total length of water separator 10: L1 = 200 mm,
distance outer tube 22 - fluid line 36: L2 = 38 mm,
length of conical region 23: L3 = 21.7 mm,
distance swirl generator hub 27 - conical region 23: L4 = 55.3 mm,
radius of transition of inflow region 21 - conical region 23: R1 = 75 mm,
distance outer tube 22 - inner tube 12: X1 = 0 mm,
length of inner tube 12: X2 = 21 mm,
length of outer tube 22: X3 = 29.5 mm.

A slant of the water-discharging flank 42 of the flow-calmed region 20 in case of installation as intended can advantageously amount to between 0° and 60°, preferably 30°, in relation to the direction of gravity 60. It is matched to the respective installation situation.

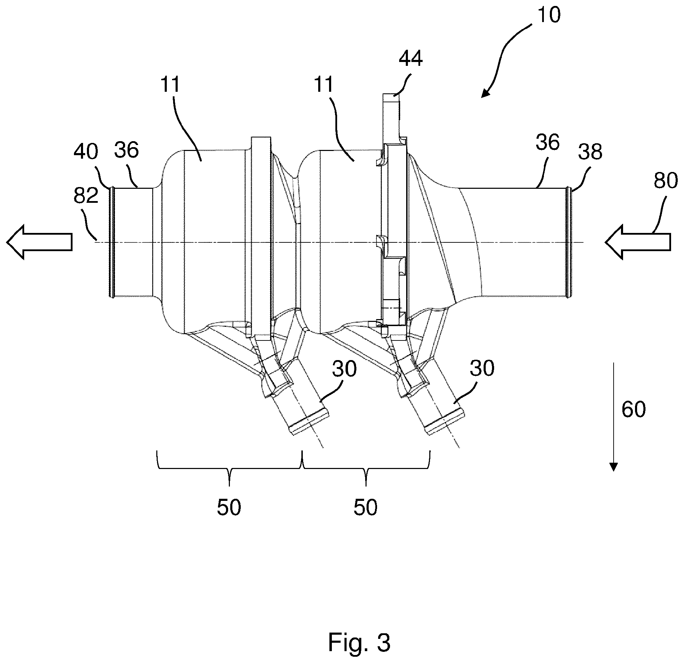

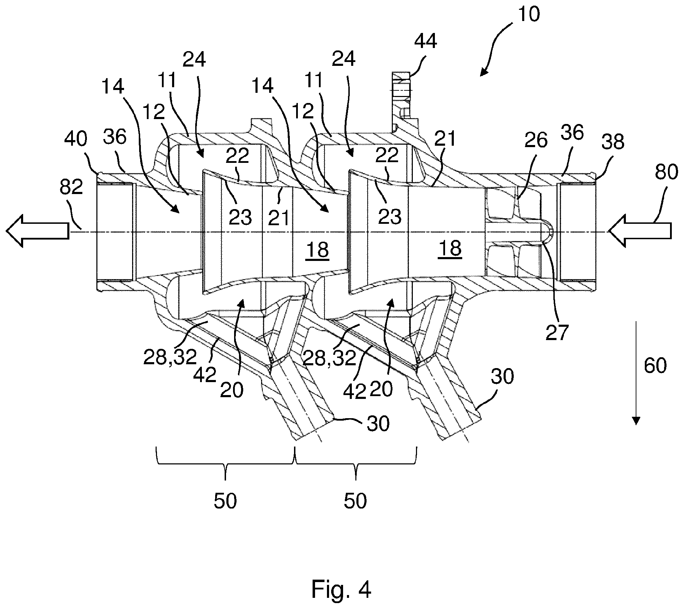

In Figure 3, a side view of a horizontally operated water separator 10 with two separation stages 50 according to a further embodiment of the invention is illustrated. Figure 4 shows a longitudinal section through the water separator 10.

In this embodiment, two separation stages 50 are arranged in a water separator 10, wherein, sequentially arranged in flow direction 80, an outer tube 22 and an inner tube 12 are alternatingly adjacently arranged, respectively. The separation stages 50 sequentially arranged in flow direction 80 are identically embodied, respectively. Upstream of the first separation stage 50, the swirl generator 26 is arranged in the fluid conduit. On the other hand, no additional swirl generator 26 is arranged upstream of the second separation stage 50. Each separation stage 50 comprises its own water drain 30. For two sequentially arranged separation stages 50, a higher degree of separation for the water separation can be achieved.

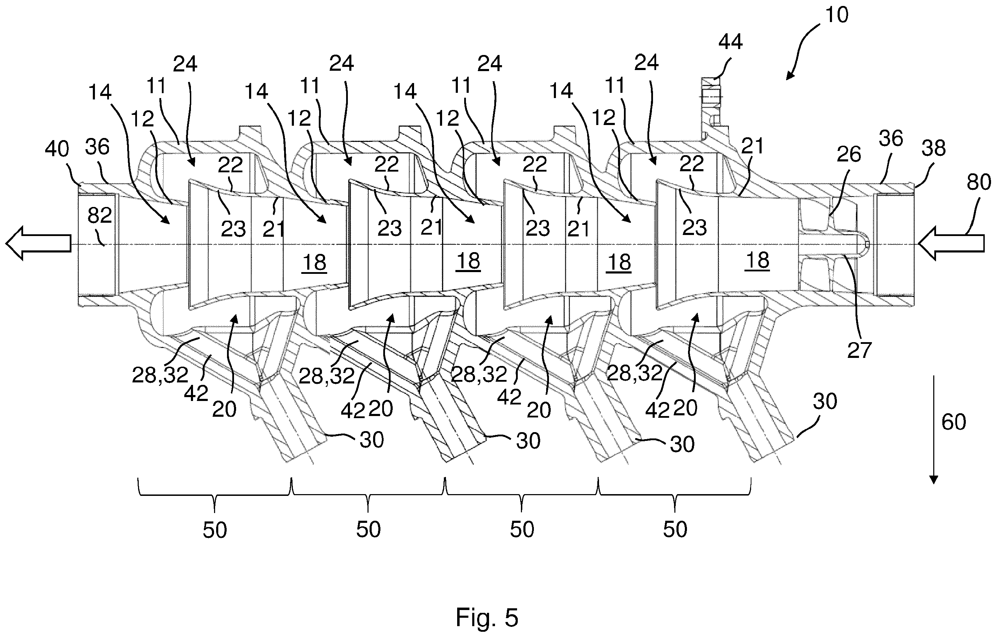

Figure 5 shows a longitudinal section through a horizontally operated water separator 10 with four separation stages 50 according to a further embodiment of the invention. For four sequentially arranged separation stages 50, an even higher degree of separation for the water separation can be achieved.

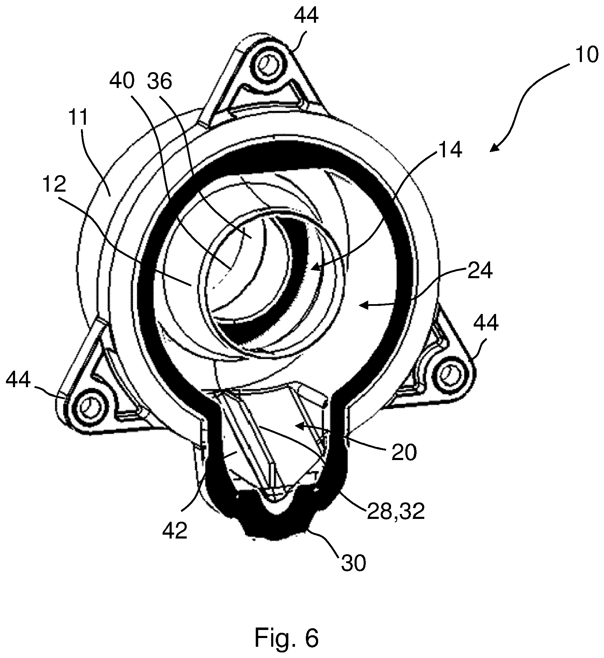

Figure 6 shows an isometric inner view of the inner tube 12 of the water separator 10 according to Figure 1 in flow direction 80. Here, only a part of the water separator 10 with the inner tube 12 and the fluid conduit 36 with the outlet 40 following downstream is illustrated.

In the lower region of the housing 11, the flow-calmed region 20 with the slanted downwardly extending flank 42 can be seen. For the purpose of breaking the swirl, the rib 32 as a flow-calming element 28 extends at the bottom of the inner wall of the flow-calmed region 20.

The housing 11 comprises three mounting flanges 44 for fastening, arranged in a triangle.

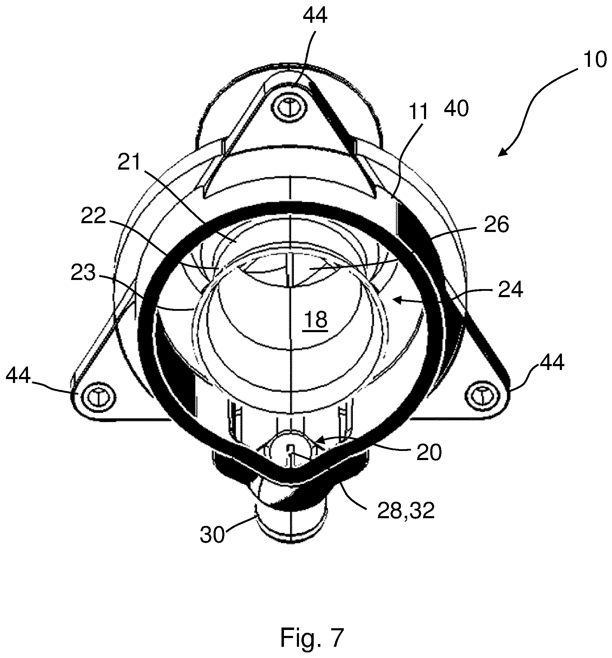

Figure 7 shows in this context an isometric inner view of the outer tube 22 of the water separator 10 according to Figure 1 opposite to the flow direction 80. The other part of the water separator 10 with the outer tube 22 and the swirl generator 26 positioned behind it is illustrated here.

In the lower region of the housing 11, the water outlet 30 and the rib 32 arranged in the flow-calmed region 20 can be seen.

Furthermore, it can be seen how the outer tube 22 opens from the inflow region 21 in a funnel shape across the conical region 23.

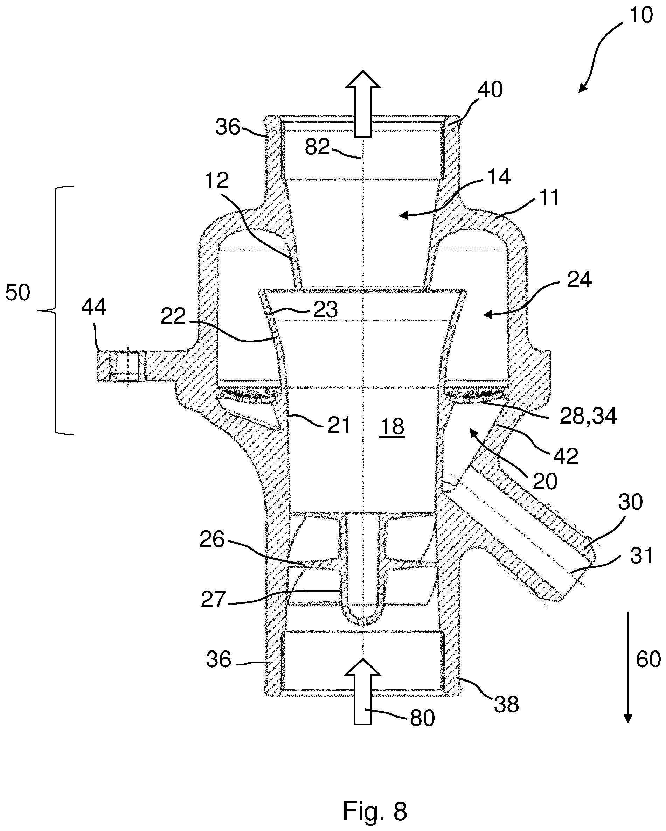

In Figure 8, a longitudinal section through a vertically operated water separator 10 with a separation stage 50 according to further embodiment of the invention is illustrated.

The principal configuration of the water separator 10 is identical to the embodiment illustrated in Figure 1 for a horizontal operation. Only the flow-calmed region 20 with the water outlet 30 is arranged differently. The water-discharging flank 42, for vertical installation as intended, is slanted in flow direction 80 away from the axial direction 82 because in this manner a particularly compact configuration can be achieved.

The flow-calming element 28 is configured as a grid 34 arranged in a ring shape around the outer tube 22 and separating the separation region 24 from the flow-calmed region 20. In particular, the grid 34, viewed in flow direction 80, is convexly curved. Alternatively, the grid 34 can also be arranged in a torus shape around the outer tube 22.

For a vertical installation or operation of the water separator 10, a liquid drainage opening 29 is arranged at the geodetically lowest location of the hub 27 of the swirl generator 26. The liquid drainage opening 29 prevents a collection of liquid at the hub inner side. The liquid drainage opening 29 is provided with a small cross section which, on the one hand, prevents a bypass flow to the swirl generator 26 through the swirl generator hub 27, on the other hand, is so large that the surface tension enables the liquid to drain through the opening 29. Preferably, the opening 29, in particular for a water drain, has a diameter of at least 2 mm.

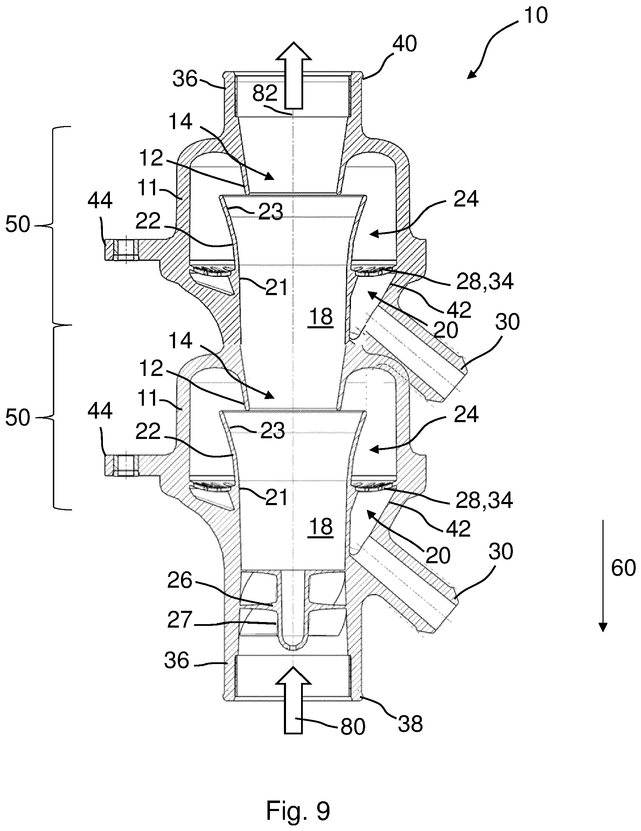

Figure 9 shows a longitudinal section through a vertically operated water separator 10 with two separation stages 50 according to a further embodiment of the invention.

In this embodiment, two separation stages 50 are arranged in a water separator 10, wherein, sequentially arranged in flow direction 80, an outer tube 22 and an inner tube 12 are alternatingly adjacently arranged, respectively. The separation stages 50 sequentially arranged in flow direction 80 are identically embodied, respectively. In front of the first separation stage 50, the swirl generator 26 is arranged in the fluid conduit. Each separation stage 50 comprises its own water drain 30. For two sequentially arranged separation stages 50, a higher degree of separation for water separation can be achieved.

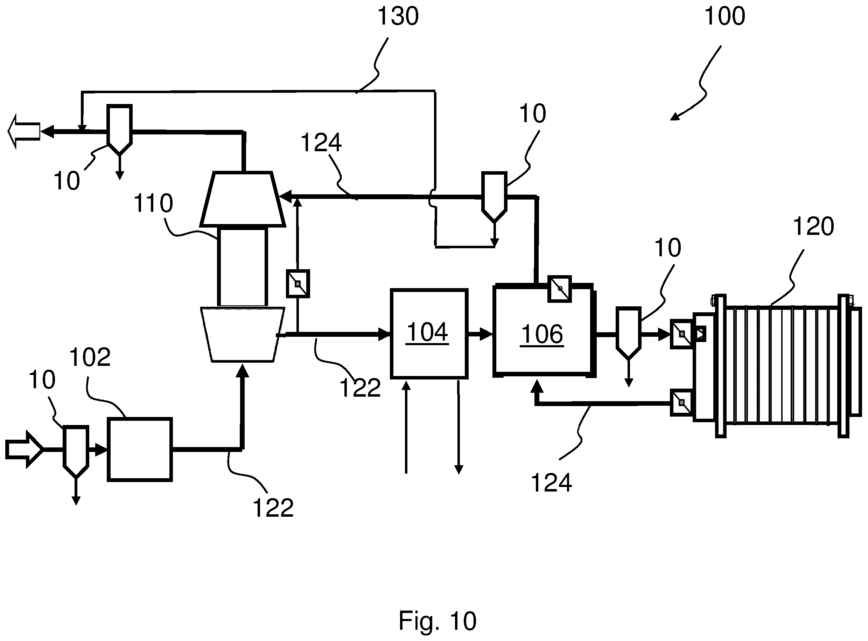

Figure 10 shows a simplified illustration of a generally known fuel cell system 100 with a fuel cell unit 120 with a cathode supply air path 122 and a cathode exhaust air path 124. Through the cathode supply air path 122, ambient air is supplied to the fuel cell unit 120, is filtered by a cleaning stage 102, and is sucked in and compressed by a compressor or a pump 110. The compressed air is cooled in a heat exchanger 104 and is provided with defined moisture by a humidifier 106.

In the fuel cell unit 120, the air oxygen reacts with hydrogen to water which is discharged as air/water mixture through the cathode exhaust air path 124 from the fuel cell unit 120. The cathode exhaust air can transfer a portion of the water via the humidifier 106 to the cathode supply air. Downstream of the humidifier 106, a water separator 10 is connected which can be embodied in accordance with the afore described embodiments. The separated water is discharged to a drainage path 130 while the dried cathode exhaust air is supplied to the turbine of the compressor or the pump 110. Positioning the water separator 10 upstream of the turbine of the compressor or the pump 110 is particularly beneficial.

Further water separators 10 are arranged in the fuel cell system 100

### REFERENCE SIGNS LIST

- 10: water separator
- 11: housing
- 12: inner tube
- 14: deceleration region
- 16: section
- 18: flow-conducting region
- 20: flow-calmed region
- 21: inflow region
- 22: outer tube
- 23: conical region
- 24: separation region
- 26: swirl generator
- 27: swirl generator hub
- 28: flow-calming element
- 29: opening of water drain
- 30: water outlet
- 31: axial direction
- 32: rib
- 34: grid
- 36: fluid conduit
- 38: inlet
- 40: outlet
- 42: flank
- 44: mounting flange
- 50: separation stage
- 60: direction of gravity
- 80: flow direction
- 82: axial direction
- 100: fuel cell system
- 102: cleaning stage
- 104: heat exchanger
- 106: humidifier
- 110: pump
- 120: fuel cell unit
- 122: cathode supply air path
- 124: cathode exhaust air path
- 130: drainage line
- A1: half-angle of cone of inner tube
- A2: half-angle of cone of conical region of outer tube
- A3: half-angle of cone of inflow region of outer tube
- D1: diameter of fluid conduit at the inlet
- D2: exit diameter of outer tube
- D3: entry diameter of inner tube
- D4: diameter of housing
- D5: diameter of hub of swirl generator
- D6: diameter of water drain
- L1: total length of water separator
- L2: distance outlet outer tube - fluid conduit
- L3: length of conical region
- L4: distance fluid conduit - conical region
- R1: radius of transition inlet region - conical region
- X1: distance outer tube - inner tube
- X2: length of inner tube
- X3: length of outer tube

## Claims

1. A liquid separator (10) for separating a liquid from a fluid flow, the liquid separator (10) comprising:
a housing (11);
a flow-conducting region (18) arranged inside the housing (11) and comprising an inner tube (12) and an outer tube (22) adjoining the inner tube (12), the inner tube (12) being arranged downstream of the outer tube (22) in a flow direction (80);
a fluid conduit (36) connected to the flow-conducting region (18) and having a first diameter (D1), the fluid conduit (36) comprising a swirl generator (26) for generating a swirl of the fluid flow;
a separation region (24) arranged at a radial outer side of the inner tube (12) and the outer tube (22);
a fluid outlet (30) connected to the separation region (24) and extending at a slant to an axial direction (82),
wherein the outer tube (22) comprises an inflow region (21) and a conical and/or tulip-shaped region (23) downstream of the inflow region (21) in the flow direction (80), the inflow region (21) being connected to the fluid conduit (36), and the conical and/or tulip-shaped region (23) comprising a downstream second diameter (D2), and
wherein the inner tube (12) is conical and/or tulip-shaped and comprises an upstream third diameter (D3); and
a flow-calmed region (20) arranged between the separation region (24) and the liquid outlet (30) and comprising a flow-calming element (28) for calming the fluid flow,
wherein the flow-calming element (28) comprises a grid (34) arranged in a ring shape around the outer tube (22) and separating the separation region (24) from the flow-calmed region (20).

2. The liquid separator according to claim 1, wherein the upstream third diameter (D3) is smaller than the first diameter (D1), and
wherein the first diameter (D1) is smaller than the downstream second diameter (D2).

3. The liquid separator according to claim 1 or 2, wherein the flow-calming element (28) comprises a rib (32) extending along an inner wall of the flow-calmed region (20) to the liquid outlet (30).

4. The liquid separator according to one of the preceding claims, wherein a ratio of the downstream second diameter (D2) to the upstream third diameter (D3) amounts to at least 1 and at most 3.

5. The liquid separator according to one of the preceding claims, wherein an axial distance (X1) between the inner tube (12) and the outer tube (22) amounts to between -20 mm and +20 mm, a negative distance (X1) meaning that the inner tube (12) is immersed in the outer tube (22).

6. The liquid separator according to one of the preceding claims, wherein a ratio of a length (X2) of the inner tube (12) to a length (X3) of the outer tube (22) amounts to at least 0.1 and at most 1.

7. The liquid separator according to one of the preceding claims, wherein a half-angle of a cone (A1) of the conical inner tube (12) amounts to between -10° and +20°.

8. The liquid separator according to one of the preceding claims, wherein a half-angle of a cone (A2) of the conical region (23) of the outer tube (22) amounts to between -10° and +20°.

9. The liquid separator according to one of the preceding claims, wherein a half-angle of a cone (A3) of the inflow region (21) of the outer tube (22) amounts to between 0° and +10°.

10. The liquid separator according to one of the preceding claims, wherein a slant of a liquid-discharging flank (42) of the flow-calmed region (20)amounts to between 0° and 60°, in relation to a direction of gravity (60).

11. The liquid separator according to claim 10, wherein the liquid-discharging flank (42) of the flow-calmed region (20), in a horizontal installation, is slanted toward the axial direction (82) in the flow direction (80), and
wherein the liquid-discharging flank (42), in a vertical installation, is slanted away from the axial direction (82) in the flow direction (80).

12. The liquid separator according to one of the preceding claims, further comprising:
another flow-conducting region (18) arranged inside the housing (11) and connected to and downstream from the flow-conducting region (18) in the flow direction (80), the other flow-conducting region (18) comprising another inner tube (12) and another outer tube (22) adjoining the other inner tube (12), the other inner tube (12) being arranged downstream of the other outer tube (22) in a flow direction (80),
wherein the fluid conduit (36) is connected to the other flow-conducting region (18);
another separation region (24) arranged at a radial outer side of the other inner tube (12) and the other outer tube (22);
another fluid outlet (30) connected to the other separation region (24) and extending at a slant to the axial direction (82); and
another flow-calmed region (20) arranged between the other separation region (24) and the other liquid outlet (30) and comprising another flow-calming element (28) for calming the fluid flow.

13. A fuel cell system (100) comprising:
a cathode supply air path (122) and a cathode exhaust air path (124) of a fuel cell unit (120); and
the liquid separator (10) according to one of the preceding claims and for separating water from an air flow of the cathode supply air path (122) or the cathode exhaust air path (124).

## Patentansprüche

1. Flüssigkeitsabscheider (10) zum Abscheiden einer Flüssigkeit aus einem Fluidstrom, der Flüssigkeitsabscheider (10) umfassend:
ein Gehäuse (11);
einen Strömungsleitbereich (18), der innerhalb des Gehäuses (11) angeordnet ist und ein Innenrohr (12) sowie ein an das Innenrohr (12) angrenzendes Außenrohr (22) umfasst, wobei das Innenrohr (12) in einer Strömungsrichtung (80) stromabwärtig des Außenrohrs (22) angeordnet ist;
eine mit dem Strömungsleitbereich (18) verbundene Fluidleitung (36) mit einem ersten Durchmesser (D1), wobei die Fluidleitung (36) einen Wirbelgenerator (26) zum Erzeugen eines Wirbels in dem Fluidstrom umfasst;
einen Abscheidebereich (24), der an einer radial äußeren Seite des Innenrohrs (12) und des Außenrohrs (22) angeordnet ist;
einen Fluidauslass (30), der mit dem Abscheidebereich (24) verbunden ist und schräg zu einer Achsrichtung (82) verläuft,
wobei das Außenrohr (22) einen Einströmbereich (21) und einen in Strömungsrichtung (80) stromabwärtig des Einströmbereichs (21) angeordneten konischen und/oder tulpenförmigen Bereich (23) umfasst, wobei der Einströmbereich (21) mit der Fluidleitung (36) verbunden ist, und der konische und/oder tulpenförmige Bereich (23) einen stromabwärtigen zweiten Durchmesser (D2) umfasst, und
wobei das Innenrohr (12) konisch und/oder tulpenförmig ausgebildet ist und einen stromaufwärtigen dritten Durchmesser (D3) umfasst; und
einen zwischen dem Abscheidebereich (24) und dem Flüssigkeitsauslass (30) angeordneten strömungsberuhigten Bereich (20), der ein Strömungsberuhigungselement (28) zur Beruhigung des Fluidstroms umfasst,
wobei das Strömungsberuhigungselement (28) ein Gitter (34) umfasst, das ringförmig um das Außenrohr (22) angeordnet ist und den Abscheidebereich (24) vom strömungsberuhigten Bereich (20) trennt.

2. Flüssigkeitsabscheider nach Anspruch 1, wobei der stromaufwärtige dritte Durchmesser (D3) kleiner ist als der erste Durchmesser (D1), und
wobei der erste Durchmesser (D1) kleiner ist als der stromabwärtige zweite Durchmesser (D2).

3. Flüssigkeitsabscheider nach Anspruch 1 oder 2, wobei das Strömungsberuhigungselement (28) eine Rippe (32) umfasst, die sich entlang einer Innenwand des strömungsberuhigten Bereichs (20) bis zum Flüssigkeitsauslass (30) erstreckt.

4. Flüssigkeitsabscheider nach einem der obigen Ansprüche, wobei das Verhältnis des stromabwärtigen zweiten Durchmessers (D2) zum stromaufwärtigen dritten Durchmesser (D3) mindestens 1 und höchstens 3 beträgt.

5. Flüssigkeitsabscheider nach einem der obigen Ansprüche, wobei ein axialer Abstand (X1) zwischen dem Innenrohr (12) und dem Außenrohr (22) zwischen -20 mm und +20 mm beträgt, wobei ein negativer Abstand (X1) bedeutet, dass das Innenrohr (12) in das Außenrohr (22) eingetaucht ist.

6. Flüssigkeitsabscheider nach einem der obigen Ansprüche, wobei das Verhältnis einer Länge (X2) des Innenrohrs (12) zu einer Länge (X3) des Außenrohrs (22) mindestens 0,1 und höchstens 1 beträgt.

7. Flüssigkeitsabscheider nach einem der obigen Ansprüche, wobei ein Halbwinkel eines Konus (A1) des konischen Innenrohrs (12) zwischen -10° und +20° beträgt.

8. Flüssigkeitsabscheider nach einem der obigen Ansprüche, wobei ein Halbwinkel eines Konus (A2) des konischen Bereichs (23) des Außenrohrs (22) zwischen -10° und +20° beträgt.

9. Flüssigkeitsabscheider nach einem der obigen Ansprüche, wobei ein Halbwinkel eines Konus (A3) des Einströmbereichs (21) des Außenrohrs (22) zwischen 0° und +10° beträgt.

10. Flüssigkeitsabscheider nach einem der obigen Ansprüche, wobei eine Abschrägung einer Flüssigkeitsauslassflanke (42) des strömungsberuhigten Bereichs (20) in Bezug auf eine Schwerkraftrichtung (60) zwischen 0° und 60° beträgt.

11. Flüssigkeitsabscheider nach Anspruch 10, wobei die Flüssigkeitsauslassflanke (42) des strömungsberuhigten Bereichs (20) bei horizontaler Installation in Strömungsrichtung (80) zur Achsrichtung (82) hin abgeschrägt ist, und
wobei die Flüssigkeitsauslassflanke (42) bei vertikaler Installation in Strömungsrichtung (80) von der Achsrichtung (82) weg abgeschrägt ist.

12. Flüssigkeitsabscheider nach einem der obigen Ansprüche, ferner umfassend:
einen weiteren Strömungsleitbereich (18), der innerhalb des Gehäuses (11) angeordnet und mit dem in Strömungsrichtung (80) stromabwärts von dem Strömungsleitbereich (18) verbunden ist, wobei der andere Strömungsleitbereich (18) ein weiteres Innenrohr (12) und ein weiteres Außenrohr (22) umfasst, das an das andere Innenrohr (12) angrenzt, wobei das andere Innenrohr (12) in Strömungsrichtung (80) stromabwärts von dem anderen Außenrohr (22) angeordnet ist,
wobei die Fluidleitung (36) mit dem anderen Strömungsleitbereich (18) verbunden ist;
einen weiteren Abscheidebereich (24), der an einer radial äußeren Seite des anderen Innenrohrs (12) und des anderen Außenrohrs (22) angeordnet ist;
einen weiteren Fluidauslass (30), der mit dem anderen Abscheidebereich (24) verbunden ist und abgeschrägt zur Achsrichtung (82) verläuft; und
einen zwischen dem anderen Abscheidebereich (24) und dem anderen Flüssigkeitsauslass (30) angeordneten weiteren strömungsberuhigten Bereich (20), der ein weiteres Strömungsberuhigungselement (28) zur Beruhigung des Fluidstroms umfasst.

13. Brennstoffzellensystem (100), umfassend:
einen Kathodenzuluftpfad (122) und einen Kathodenabluftpfad (124) einer Brennstoffzelleneinheit (120); und
den Flüssigkeitsabscheider (10) nach einem der obigen Ansprüche zum Abscheiden von Wasser aus einem Luftstrom des Kathodenzuluftpfads (122) oder des Kathodenabluftpfads (124).

## Revendications

1. Séparateur de liquide (10) destiné à séparer un liquide d'un écoulement de fluide, le séparateur de liquide (10) comprenant:
un boîtier (11);
une zone conductrice d'écoulement (18) disposée à l'intérieur du boîtier (11) et comprenant un tube intérieur (12) et un tube extérieur (22) adjacent au tube intérieur (12), le tube intérieur (12) étant disposé en aval du tube extérieur (22) dans un sens d'écoulement (80);
un conduit de fluide (36) relié à la zone conductrice d'écoulement (18) et ayant un premier diamètre (D1), le conduit de fluide (36) comprenant un générateur de tourbillon (26) destiné à générer un tourbillon dans l'écoulement de fluide;
une zone de séparation (24) disposée sur un côté radialement extérieur du tube intérieur (12) et du tube extérieur (22);
une sortie de fluide (30) reliée à la zone de séparation (24) et s'étendant en biais par rapport à une direction axiale (82),
dans lequel le tube extérieur (22) comprend une zone d'entrée (21) et une zone conique et/ou en forme de tulipe (23) en aval de la zone d'entrée (21) dans le sens d'écoulement (80), la zone d'entrée (21) étant reliée au conduit de fluide (36), et la zone conique et/ou en forme de tulipe (23) comprenant un deuxième diamètre aval (D2), et
dans lequel le tube intérieur (12) est conique et/ou en forme de tulipe et comprend un troisième diamètre amont (D3); et
une zone de stabilisation d'écoulement (20) disposée entre la zone de séparation (24) et la sortie de liquide (30) et comprenant un élément de stabilisation d'écoulement (28) destiné à stabiliser l'écoulement du fluide,
dans lequel l'élément de stabilisation d'écoulement (28) comprend une grille (34) disposée en forme d'anneau autour du tube extérieur (22) et séparant la zone de séparation (24) de la zone de stabilisation d'écoulement (20).

2. Séparateur de liquide selon la revendication 1, dans lequel le troisième diamètre amont (D3) est inférieur au premier diamètre (D1), et
dans lequel le premier diamètre (D1) est inférieur au deuxième diamètre aval (D2).

3. Séparateur de liquide selon la revendication 1 ou 2, dans lequel l'élément de stabilisation d'écoulement (28) comprend une nervure (32) s'étendant le long d'une paroi interne de la zone de stabilisation d'écoulement (20) jusqu'à la sortie de liquide (30).

4. Séparateur de liquide selon l'une quelconque des revendications précédentes, dans lequel le rapport entre le deuxième diamètre aval (D2) et le troisième diamètre amont (D3) est compris entre 1 au minimum et 3 au maximum.

5. Séparateur de liquide selon l'une quelconque des revendications précédentes, dans lequel une distance axiale (X1) entre le tube intérieur (12) et le tube extérieur (22) est comprise entre -20 mm et +20 mm, une distance négative (X1) signifiant que le tube intérieur (12) est immergé dans le tube extérieur (22).

6. Séparateur de liquide selon l'une quelconque des revendications précédentes, dans lequel le rapport entre la longueur (X2) du tube intérieur (12) et la longueur (X3) du tube extérieur (22) est compris entre 0,1 au minimum et 1 au maximum.

7. Séparateur de liquide selon l'une quelconque des revendications précédentes, dans lequel un demi-angle d'un cône (A1) du tube intérieur conique (12) est compris entre -10° et +20°.

8. Séparateur de liquide selon l'une quelconque des revendications précédentes, dans lequel un demi-angle d'un cône (A2) de la zone conique (23) du tube extérieur (22) est compris entre -10° et +20°.

9. Séparateur de liquide selon l'une quelconque des revendications précédentes, dans lequel un demi-angle d'un cône (A3) de la zone d'entrée (21) du tube extérieur (22) est compris entre 0° et +10°.

10. Séparateur de liquide selon l'une quelconque des revendications précédentes, dans lequel une inclinaison d'un flanc d'évacuation de liquide (42) de la zone de stabilisation d'écoulement (20) est comprise entre 0° et 60°, par rapport à une direction de la force de gravité (60).

11. Séparateur de liquide selon la revendication 10, dans lequel le flanc d'évacuation de liquide (42) de la zone de stabilisation d'écoulement (20), dans une installation horizontale, est incliné vers la direction axiale (82) dans le sens d'écoulement (80), et
dans lequel le flanc d'évacuation de liquide (42), dans une installation verticale, est incliné loin de la direction axiale (82) dans le sens d'écoulement (80).

12. Séparateur de liquide selon l'une quelconque des revendications précédentes, comprenant en outre:
une autre zone conductrice d'écoulement (18) disposée à l'intérieur du boîtier (11) et reliée à la et en aval de la zone conductrice d'écoulement (18) dans le sens d'écoulement (80), l'autre zone conductrice d'écoulement (18) comprenant un autre tube intérieur (12) et un autre tube extérieur (22) adjacent à l'autre tube intérieur (12), l'autre tube intérieur (12) étant disposé en aval de l'autre tube extérieur (22) dans le sens d'écoulement (80),
dans lequel le conduit de fluide (36) est relié à l'autre zone conductrice d'écoulement (18);
une autre zone de séparation (24) disposée sur un côté radialement extérieur de l'autre tube intérieur (12) et de l'autre tube extérieur (22);
une autre sortie de fluide (30) reliée à l'autre zone de séparation (24) et s'étendant en biais par rapport à la direction axiale (82); et
une autre zone de stabilisation d'écoulement (20) disposée entre l'autre zone de séparation (24) et l'autre sortie de liquide (30) et comprenant un autre élément de stabilisation d'écoulement (28) destiné à stabiliser l'écoulement du fluide.

13. Système de pile à combustible (100) comprenant:
un trajet d'air d'alimentation de cathode (122) et un trajet d'air d'évacuation de cathode (124) d'une unité de pile à combustible (120); et
le séparateur de liquide (10) selon l'une quelconque des revendications précédentes et destiné à séparer l'eau d'un écoulement d'air du trajet d'air d'alimentation de cathode (122) ou du trajet d'air d'évacuation de cathode (124).
